# EUROPEAN PATENT SPECIFICATION

(11) **EP 1 376 586 B1**
(45) Date of publication and mention of the grant of the patent: **13.12.2006**
(21) Application number: 03013445.6
(22) Date of filing: 23.06.2003
(51) Int. Cl.: G11B 27/10

(54) **Data reproduction apparatus, data reproduction method, and data recording medium**
Datenwiedergabevorrichtung, Datenwiedergabeverfahren und Datenaufzeichnungsmedium
Dispositif de reproduction de données, méthode de reproduction de données et support d'enregistrement de données

(30) Priority: 26.06.2002 JP 2002185894
(43) Date of publication of application: 02.01.2004
(73) Proprietor: Pioneer Corporation, Tokyo-to (JP)
(72) Inventor: Shimizu, Yuji, Pioneer Corporation, Tokorozawa-shi, Saitama-ken (JP); Nonaka, Takeshi, Pioneer Corporation, Tokorozawa-shi, Saitama-ken (JP)
(74) Representative: Klingseisen, Franz

(56) References cited:
- EP-A- 1 205 933
- WO-A-03/056560
- US-A- 5 999 694
- US-A1- 2002 054 049

## Description

### BACKGROUND OF THE INVENTION

### 1. Field of the Invention

This invention relates to a data-reproduction apparatus, data-reproduction method and data-recording medium, and more particularly, to a data-reproduction apparatus that is capable of selecting reproduction data to reproduce after obtaining a summary of the contents of the reproduction data to reproduce in advance.

### 2. Description of the Related Art

Conventionally, when reproducing reproduction data from a recording medium such as an optical disc on which reproduction data such as video data or the like are recorded, by displaying in advance a still screen representative of the contents of the reproduction data (hereafter, this representative still image will be called a thumbnail) for each item of reproduction data, a the reproduction data to be reproduced is selected after receiving a summary of the contents of the reproduction data.

On the other hand, when reproducing the reproduction data, there are cases when it is necessary to temporarily pause the reproduction, and then afterward restart reproduction from the point where it was paused. Conventionally, in this case, the time on the reproduction time line at which reproduction of the reproduction data was paused is stored in memory as time data, and by restarting reproduction from the time displayed according to the stored time data, the operator is able to quickly restart reproduction without having to search for the paused position.

However, when restarting reproduction in the conventional reproduction restart process described above, reproduction is restarted only based on the time data stored in memory, so the operator is unable to see before restarting reproduction the contents of the part of the reproduction data from which reproduction is to be restarted, and thus there was a problem in that the convenience of the apparatus as a data-reproduction apparatus was poor.

### SUMMARY OF THE INVENTION

Thereupon, the present invention has been made in view of the above-described points in problem and has an object to provide a data-reproduction apparatus, data-reproduction method and reproduction-control method, and a data-recording medium on which the reproduction-control program is recorded, that are capable of performing the reproduction process after quickly and sufficiently obtaining a summary of the reproduction data from which reproduction is to be restarted.

The above object of the present invention can be achieved by a data-reproduction apparatus. The data-reproduction apparatus is provided with: a memory device of storing specification data for specifying the portion of the reproduction data from which reproduction is to be restarted when pausing reproduction of reproduction data; a judgment device that determines, based on said stored specification data, whether or not said reproduction data to be reproduced this time is reproduction data from which reproduction is to be restarted, or is reproduction data that is to be reproduced from the beginning of the reproduction data; a restart-output device of outputting restart representative data, which are data that are representative of the portion that was specified based on said specification data when said reproduction data is reproduction data that is paused and is to be restarted; and a initial-output device of outputting initial representative data, which are preset data that are representative of the entire reproduction data when said reproduction data are reproduction data to be reproduced from the beginning of the reproduction data.

According to the data-reproduction apparatus, the specification data from when reproduction is paused is stored in memory device, and based on that specification data , the process determines whether the reproduction data is reproduction data of a paused reproduction process that is to be restarted, or reproduction data is to be reproduced from the beginning; and when it is determined that the reproduction data is reproduction data of a reproduction process that is to be restarted, the position from where reproduction is to be restarted is specified based on the specification data, the restart representative data are output; however, when it is determined that the reproduction data are to be reproduced from the beginning, the initial representative data are output, so it is possible to quickly obtain a summary of the contents of the portion to reproduce from the restart representative data that corresponds to the part to be reproduced this time, even when the reproduction data are that of a reproduction process to be restarted.

In one aspect of the invention, said representative data are image data; said restart representative data is the image to be reproduced first at said portion; and said initial representative data is a preset image representing the entire reproduction data.

According to this aspect, since said representative data are image data; said restart representative data is the image to be reproduced first at said portion; and said initial representative data is a preset image representing the entire reproduction data, it is possible to quickly obtain a summary of the contents of the portion to reproduce from the image to be reproduced first at said portion that corresponds to the part to be reproduced this time, even when the reproduction data are that of a reproduction process to be restarted.

In another aspect of the invention said specification data is the reproduction time at the beginning of said portion on the reproduction timeline of said reproduction data from which reproduction is to be restarted.

According to this aspect, since the specification data is the time on the reproduction timeline of the reproduction data from which reproduction is to be restarted, it is possible to sufficiently specify the part from which reproduction is to be restarted using only a small amount of data.

The above object of the present invention can be achieved by a data-reproduction method. The data-reproduction method is provided with: a memory process of storing specification data for specifying the portion of the reproduction data from which reproduction is to be restarted when pausing reproduction of reproduction data; a judgment process that determines, based on said stored specification data, whether or not said reproduction data to be reproduced this time is reproduction data from which reproduction is to be restarted, or is reproduction data that is to be reproduced from the beginning of the reproduction data; a restart-output process of outputting restart representative data, which are data that are representative of the portion that was specified based on said specification data when said reproduction data is reproduction data that is paused and is to be restarted; and a initial-output process of outputting initial representative data, which are preset data that are representative of the entire reproduction data when said reproduction data are reproduction data to be reproduced from the beginning of the reproduction data.

According to the data-reproduction method, the specification data from when reproduction is paused is stored, and based on that specification data , the process determines whether the reproduction data is reproduction data of a paused reproduction process that is to be restarted, or reproduction data is to be reproduced from the beginning; and when it is determined that the reproduction data is reproduction data of a reproduction process that is to be restarted, the position from where reproduction is to be restarted is specified based on the specification data, the restart representative data are output; however, when it is determined that the reproduction data are to be reproduced from the beginning, the initial representative data are output, so it is possible to quickly obtain a summary of the contents of the portion to reproduce from the restart representative data that corresponds to the part to be reproduced this time, even when the reproduction data are that of a reproduction process to be restarted.

The above object of the present invention can be achieved by a computer data signal embodied in a carrier wave. The computer data signal represent a sequence of instructions, which executed by a computer included in the data-reproduction apparatus that reproduces reproduction data, the instructions cause the computer to function as: a memory device of storing specification data for specifying the portion of the reproduction data from which reproduction is to be restarted when pausing reproduction of reproduction data; a judgment device that determines, based on said stored specification data, whether or not said reproduction data to be reproduced this time is reproduction data from which reproduction is to be restarted, or is reproduction data that is to be reproduced from the beginning of the reproduction data; a restart-output device of outputting restart representative data, which are data that are representative of the portion that was specified based on said specification data when said reproduction data is reproduction data that is paused and is to be restarted; and a initial-output device of outputting initial representative data, which are preset data that are representative of the entire reproduction data when said reproduction data are reproduction data to be reproduced from the beginning of the reproduction data.

According to the computer data signal, the computer reads out the computer data signal from the carrier wave and the computer functions in such a manner that the specification data from when reproduction is paused is stored, and based on that specification data , the process determines whether the reproduction data is reproduction data of a paused reproduction process that is to be restarted, or reproduction data is to be reproduced from the beginning; and when it is determined that the reproduction data is reproduction data of a reproduction process that is to be restarted, the position from where reproduction is to be restarted is specified based on the specification data, the restart representative data are output; however, when it is determined that the reproduction data are to be reproduced from the beginning, the initial representative data are output, so it is possible to quickly obtain a summary of the contents of the portion to reproduce from the restart representative data that corresponds to the part to be reproduced this time, even when the reproduction data are that of a reproduction process to be restarted.

The above object of the present invention can be achieved by a data-recording medium. The data-recording medium records a program so as to be readable by a computer included in the data-reproduction apparatus that reproduces reproduction data, wherein said program allows said computer to function as: a memory device of storing specification data for specifying the portion of the reproduction data from which reproduction is to be restarted when pausing reproduction of reproduction data; a judgment device that determines, based on said stored specification data, whether or not said reproduction data to be reproduced this time is reproduction data from which reproduction is to be restarted, or is reproduction data that is to be reproduced from the beginning of the reproduction data; a restart-output device of outputting restart representative data, which are data that are representative of the portion that was specified based on said specification data when said reproduction data is reproduction data that is paused and is to be restarted; and a initial-output device of outputting initial representative data, which are preset data that are representative of the entire reproduction data when said reproduction data are reproduction data to be reproduced from the beginning of the reproduction data.

According to the data-recording medium, the computer reads out the program from the information recording medium and it functions in such a manner that the specification data from when reproduction is paused is stored, and based on that specification data , the process determines whether the reproduction data is reproduction data of a paused reproduction process that is to be restarted, or reproduction data is to be reproduced from the beginning; and when it is determined that the reproduction data is reproduction data of a reproduction process that is to be restarted, the position from where reproduction is to be restarted is specified based on the specification data, the restart representative data are output; however, when it is determined that the reproduction data are to be reproduced from the beginning, the initial representative data are output, so it is possible to quickly obtain a summary of the contents of the portion to reproduce from the restart representative data that corresponds to the part to be reproduced this time, even when the reproduction data are that of a reproduction process to be restarted.

### BRIEF DESCRIPTION OF THE DRAWINGS

FIG. 1 is a block diagram showing the construction of the data-recording/reproduction apparatus of an embodiment of the invention.
FIG. 2 is a flowchart showing the reproduction-pause process of an embodiment of the invention.
FIG. 3 is a flowchart showing the reproduction process of an embodiment of the invention.
FIG. 4 is a drawing showing an example of a selection screen that is displayed during the reproduction process of an embodiment of the invention.

### DESCRIPTION OF THE PREFERRED EMBODIMENTS

The preferred embodiments of the invention will be explained based on the drawings.

In the embodiments of the invention explained below, the invention is applied to a data-recording/reproduction apparatus that is capable of both recording and reproducing video data and audio data.

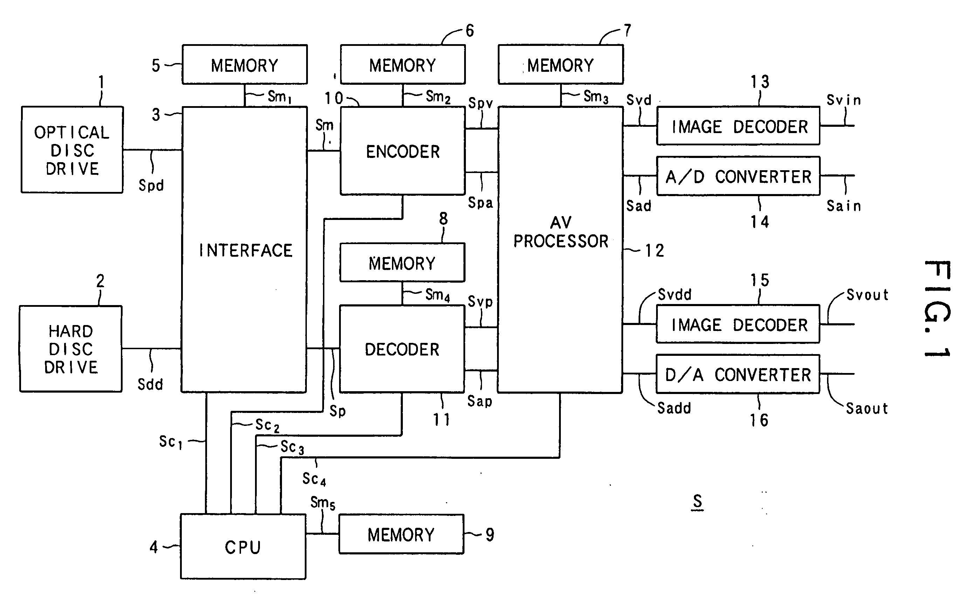

First, FIG. 1 will be used to explain the basic construction and the basic operation of the data-recording/reproduction apparatus of this embodiment. FIG. 1 is a block diagram showing the basic construction of the data-recording/reproduction apparatus of this embodiment of the invention.

As shown in FIG. 1, the data-recording/reproduction apparatus of this embodiment comprises: an optical disc drive 1 that is capable of recording or reproducing optical data to or from an optical disc (not shown in the figure); a hard disc drive 2 that is capable of recording or reproducing magnetic data to or from a magnetic disc (not shown in the figure); an interface 3; a CPU 4 that functions as a judgment device, a restart-output device, and initial-output device; volatile memory 5 to 8; non-volatile memory 9 that functions as a storage device; an encoder 10; a decoder 11; and AV (Audio Video) processor 12; a video decoder 13; and A/D (Analog/Digital) converter 14; an video encoder 15; and a D/A (Digital/Analog) converter 16.

The overall operation will be explained next.

First, the operation of recording video data and audio data that is input to the data-recording apparatus S from the outside will be explained.

When recording, first, the input video signal Svin is input from the video-input terminal (not shown in the figure) as an analog signal, then the image decoder 13 converts it to a digital signal and performs a preset decoding process, then output the signal to the AV processor 12 as a digital video signal Svd.

On the other hand, the input audio signal Sain is input from the audio-input terminal (not shown in the figure) as an analog signal, then the A/D converter 14 converts it to a digital signals and outputs it to the AV processor 12 as a digital audio signal Sad.

Also, the AV processor 12 receives the necessary data from the memory 7 as a memory signal Sm3, and performs a preset process on the input digital video signal Svd and digital audio signal Sad based on a control signal Sc4 from the CPU 4, then outputs the processed video data Spv and processed audio data Spa to the encoder 10.

The encoder 10 obtains the necessary data from the memory 6 as a memory signal Sm2 and performs the necessary mixing processing on the processed video data Spv and processed audio data Spa based on a control signal Sc2 from the CPU, and then performs the encoding process according to a predetermined format, and outputs the mixed data Sm to the interface 3.

The interface 3 obtains the necessary data from the memory 5 as a memory signal Sm1, and in the case of recording the mixed data Sm on an optical disc (not shown in the figure) based on a control signal Sc1 from the CPU 4, the interface 3 outputs the data to the optical disc drive 1 as recording data Spd. After that, the optical disc drive 1 optically records the recording data Spd on the optical disc (not shown in the figure).

On the other hand, in the case of recording the mixed data Sm on a magnetic disc (not shown in the figure), the interface 3 outputs the data to a hard disc drive as recording data Sdd. After that, the hard disc drive 2 magnetically records the recording data Sdd on a magnetic disc (not shown in the figure).

When recording the video data or audio data to an optical disc or hard disc as described above, the data are recorded such that the collective video data or audio data can be identified by one title. Here, the title could be the title of a movie that contains both video data and audio data, or could be the title of a series of still image groups, or could be the title of a song in the audio data.

When recording video data, a still image from among the still images contained in that title that distinctly represents the contents of the title is specified in advance, and it is recorded together with the video data-as a thumbnail image or as time-based position data for the video.

In these operations of the recording process, the CPU 4 obtains necessary data from the memory 9 as a memory signal Sm5, and generates control signals Sc1, Sc2 and Sc4 for performing overall control of the series of recording operations described above based on control signals from a control unit (not shown in the figure), and outputs them to the corresponding components.

Next, the operation for reproducing the audio data or video data recorded on optical disc or magnetic disc for each title will be explained.

During reproduction, first, in the case of reproducing audio data or video data recorded on an optical disc for each title, the audio data and video data are detected and reproduced from the optical disc as recording data Spd, and output to the interface 3.

On the other hand, in the case of reproducing audio data or video data recorded on a magnetic disc for each title, the audio data and video data are detected and reproduced as recording data Sdd, and output to the interface 3.

The interface 3 receives the necessary data from the memory 5 as a memory signal Sm1, and based on a control signal from the CPU 4, outputs either recording data Spd or Sdd to the decoder 11 as reproduction data Sp.

From this, the decoder 11 obtains the necessary data from the memory 8 as a memory signal Sm4, and based on a control signal Sc3 from the CPU, performs a separation process for separating the audio data and video data from the reproduction data Sp, and performs the decoding process on both the separated video data and audio data, then outputs the data to the AV processor 12 as decoded video data Svp and decoded audio data Sap.

The AV processor 12 obtains the necessary data from the memory 7 as a memory signal Sm3, and based on a control signal Sc4 from the CPU 4, performs a pre-determined post-processing on the input decoded video data Svp and decoded audio data Sap, and outputs the data to the video encoder 15 and D/A converter 16 as processed video data Svdd and processed audio data Sadd.

From this, the video encoder 15 performs a pre-determined format-conversion process and analog-conversion process on the processed video data, and then outputs the analog signal to the video-output terminal (not shown in the figure) as video output data Svout. Also, after that, the video-output data Svout are output to a display device such as a television (not shown in the figure), and displayed on that display apparatus as video.

On the other hand, the D/A converter 16 performs an analog-conversion process on the processed audio data Sadd, and outputs the analog signal to the audio-output terminal (not shown in the figure) as audio-output data Saout. Also, after that, the audio-output data Saout are output to an amplifier (not shown in the figure) and amplified by the amplifier, then it is output from a speaker (also not shown in the figure).

In these operations of the reproduction process, the CPU 4 obtains the necessary data from the memory 9 as a memory signal Sm5, and based on a control signal from the control unit (not shown in the figure), generates control signals Sc1, Sc3 and Sc4 for performing overall control of the series of reproduction operations described above and outputs them to the corresponding components.

During the reproduction operation, the pause-position data required for the reproduction-pause process and reproduction process, to be described later, is stored in the memory 9.

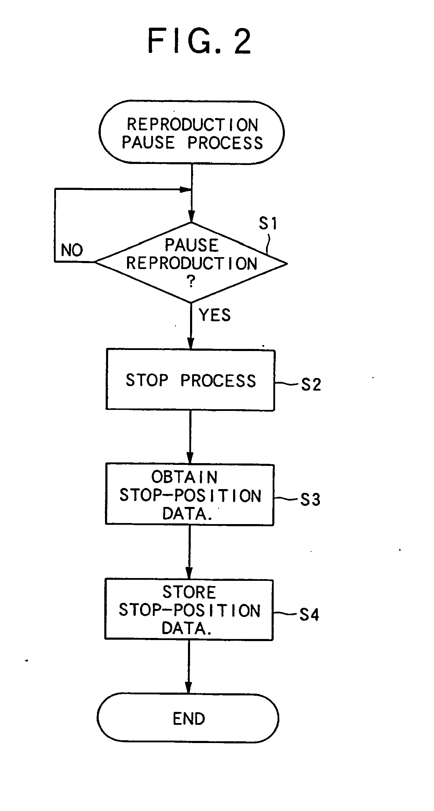

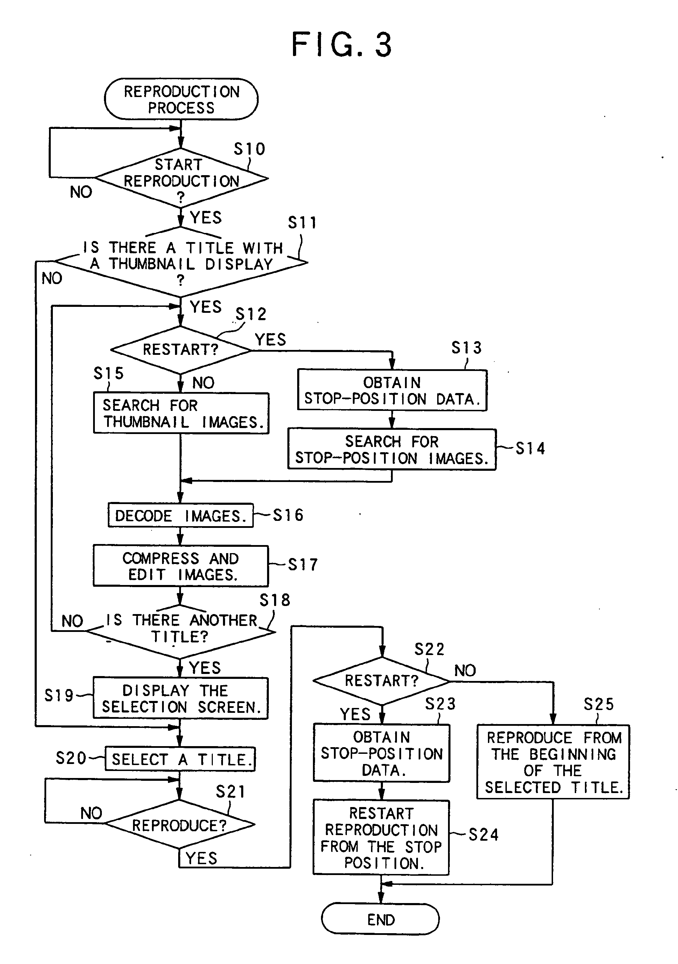

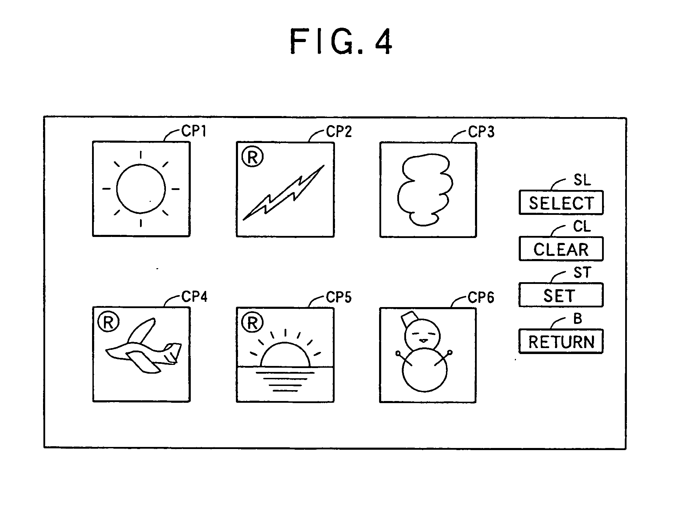

Next, FIG. 2 to FIG. 4 will be used to explain the reproduction-pause process and reproduction process of the reproduction process of this embodiment. FIG. 2 and FIG. 3 are flowcharts showing the reproduction-pause process and reproduction process that are executed by the CPU 4, and FIG. 4 is a drawing showing an example of the selection screen that is displayed on the display apparatus (not shown in the figures) during the reproduction process.

First, FIG. 2 will be used to explain the process when pausing the reproduction process in progress.

In the reproduction-pause process, first, when reproducing video data and audio data, the control unit monitors whether or not there was a control to pause the reproduction process (step S1). When there has not been a control to pause the reproduction process (step S1: NO), monitoring continues and also the reproduction process continues.

On the other hand, when monitoring and there is a control to pause the reproduction process (step S1: YES), the necessary stop process is executed for the optical disc drive 1 or hard disc drive 2 (step S2), and furthermore, reproduction time data on the reproduction timeline for the title to which the video or audio belongs is obtained as stop-position data from the decoder 11 in order to be able to specify the video or audio that was being reproduced when the pause controlled occurred (step S3), and reproduction stops after the obtained stop-position data has been stored in the memory 9 (step S4).

Next, FIG. 3 and FIG. 4 will be used to explain the reproduction process, which includes the reproduction process for restarting the stopped reproduction process.

In the reproduction process, first, it is determined whether or not the control unit (not shown in the figure) has executed a control indicating to start the reproduction process (step S10), and in the case that the start control has not been executed (step S10: NO), the process remains as is in the ready state; however, in the case that the start control has been executed (step S10: YES), it is then determined whether or not there is a title having a thumbnail image or time position data for the video data recorded on the optical disc or hard disc recorded from which reproduction is to be started (step S11).

Next, based on whether or not there is stop-position data in the memory 9, it is determined whether or not the current reproduction process is a reproduction process that was paused the previous time and is to be restarted (step S12).

Also, when the reproduction process is not from the previous time (step S12: NO), the process searches the optical disc or hard disc for thumbnail images that are preset for each title in the video data and audio data recorded on the optical disc or hard disc (step S15), and decodes the thumbnail images that are found (step S16).

On the other hand, in the judgment of step S12, when the reproduction process is from the previous time and is to be restarted (step S12: YES), the process obtains the stop-position data that is stored in the memory 9 (step S13), then searches the optical disc or hard disc for the still image that is recorded on the optical disc or hard disc at the position indicated by that stop-position data (step S14), and decodes the still image that was found (step S16).

Also, after decoding of the still images that are indicated by the thumbnail images or stop-position data has finished, the images are compressed and edited in order that all of the decoded images can be arranged on the selection screen that will be described later, and stored temporarily in the memory 9.

Next, the process determines whether or not compressing and editing of all of the thumbnail images or still images for each of the titles have been completed (step S18), and when they have not been completed (step S18: NO), the process returns to step S12 to execute the process from step S12 to step S18 for the next title. However, when it is determined that compressing and editing have been completed for all of the titles (step S18: YES), the selection screen G is displayed on the display apparatus as shown in FIG. 4.

Here, FIG. 4 will be used to explain the selection screen G. The selection screen G is a display on the display apparatus that displays the titles to be reproduced for selection, and more particularly, displays a list of thumbnail images (see step S15) or still images (see step S13 and step S14) that were compressed and edited (see step S17) as described above. Also, on the selection screen G, the thumbnail images are displayed in a list of thumbnail images and represented by the reference numbers CP1, CP3 or CP6 in FIG. 4. On the other hand, in the case of still images from which reproduction is to be restarted, the still images are displayed in a list together with a symbol or code number (in FIG. 4 R is used as an example) as shown by CP2, CP4 or CP5 in FIG. 4 indicating that reproduction is to be restarted from the previous time. Moreover, on the selection screen G there is: a selection button SL that is used when selecting one title from among the titles corresponding to the displayed images; a clear button CL that is used when clearing a selection; a set button ST that is used when setting a selection; and a return button B the is used to move to another screen.

Next, the displayed selection screen G (see step S19) is used to select the title to be reproduced (step S20). Also, the process determines whether or not a control was executed from the control unit (not displayed in the figure) to restart reproduction (step S21), and when it is determined that no control was executed (step S21: NO), the process waits as is, however, when it is determined that a control was executed (step S21: YES). The process then determines whether or not the selected title is a title of a reproduction process that was paused the previous time and is to be restarted (step S22), and when it is determined that the title is not a reproduction process to be restarted (step S22: NO), reproduction of that selected title (see step S20) starts from the beginning (step S25).

On the other hand, in the judgment of step S22, when it is determined that the title is the title of a reproduction process to be restarted (step S22: YES), the process obtains the stop-position data from the memory 9 that corresponds to the title to be reproduced (step S23), and reproduction of the selected title (see step S20) begins from the video data or audio data that continues from the reproduction-pause position indicated by the stop-position data.

As explained above, with the reproduction-pause process and reproduction process of the data-recording/reproduction apparatus of this embodiment, stop-position data from when reproduction is paused is stored in memory 9, and based on that stop-position data, the process determines whether the title is a title of a paused reproduction process that is to be restarted, or a title that is to be reproduced from the beginning; and when it is determined that the title is the title of a reproduction process that is to be restarted, the position from where reproduction is to be restarted is specified based on the stop-position data, and a still image indicating the specified position is displayed; however, when it is determined that the title is to be reproduced from the beginning, preset thumbnail data representing the entire title are displayed, so it is possible to quickly obtain a summary of the contents of the portion to reproduce from a still-image screen that corresponds to the part to be reproduced this time, even when the title is that of a reproduction process to be restarted.

Therefore, it is possible to perform the reproduction process after quickly and sufficiently obtaining a summary of the reproduction contents for a plurality of titles, including the title to be reproduced.

Also, since the stop-position data is the time on the reproduction timeline of the title from which reproduction is to be restarted, it is possible to sufficiently specify the part from which reproduction is to be restarted using only a small amount of data.

Also, in the embodiment described above, the still images were thumbnail images or images indicated the part from where to restart reproduction, however, it is also possible to use short videos that represent the contents of each title as the representative images.

Also, in the embodiment described above, the reproduction-time data for the beginning of the part of the title from which reproduction is to be restarted is stored in memory as the stop-position data, however, instead of this, it is also possible to store address data, which indicate the recording position on the optical disc or hard disc where the still image for the beginning of the part from which reproduction is to be restarted is recorded, as the stop-position data.

Furthermore, the program corresponding to the flowcharts shown in FIG. 2 and FIG. 3 is recorded on a data-recording medium such as a flexible disc, or can be obtained by way of a network such as the Internet and recorded, and by reading and executing this program by a typical microcomputer, that microcomputer can function as the CPU 4 of this embodiment.

## Claims

1. A data reproduction apparatus **characterized by**:
a memory device(9) of storing specification data for specifying a portion of reproduction data from which reproduction is to be restarted when pausing reproduction of the reproduction data;
a judgment device(4) that determines, based on said stored specification data, whether or not said reproduction data to be reproduced this time is reproduction data from which reproduction is to be restarted, or is reproduction data that is to be reproduced from the beginning of the reproduction data;
a restart-output device(4) of outputting restart representative data, which are data that are representative of the portion that was specified based on said specification data when said reproduction data is reproduction data that is paused and is to be restarted; and
an initial-output device(4) of outputting initial representative data, which are preset data that are representative of the entire reproduction data when said reproduction data are reproduction data to be reproduced from the beginning of the reproduction data.

2. The data-reproduction apparatus according to claim 1 wherein:
said representative data are image data;
said restart representative data is the image to be reproduced first at said portion; and
said initial representative data is a preset image representing the entire reproduction data.

3. The data-reproduction apparatus according to claims 1 or 2 wherein;
said specification data is the reproduction time at the beginning of said portion on the reproduction timeline of said reproduction data from which reproduction is to be restarted.

4. A data reproduction method **characterized by**:
a memory process of storing specification data for specifying a portion of reproduction data from which reproduction is to be restarted when pausing reproduction of the reproduction data;
a judgment process that determines, based on said stored specification data, whether or not said reproduction data to be reproduced this time is reproduction data from which reproduction is to be restarted, or is reproduction data that is to be reproduced from the beginning of the reproduction data;
a restart-output process of outputting restart representative data, which are data that are representative of the portion that was specified based on said specification data when said reproduction data is reproduction data that is paused and is to be restarted; and
an initial-output process of outputting initial representative data, which are preset data that are representative of the entire reproduction data when said reproduction data are reproduction data to be reproduced from the beginning of the reproduction data.

5. A data-recording medium in which a program is recorded so as to be readable by a computer included in the data-reproduction apparatus that reproduces reproduction data, wherein said program allows said computer to function as:
a memory device of storing specification data for specifying a portion of the reproduction data from which reproduction is to be restarted when pausing reproduction of the reproduction data;
a judgment device that determines, based on said stored specification data, whether or not said reproduction data to be reproduced this time is reproduction data from which reproduction is to be restarted, or is reproduction data that is to be reproduced from the beginning of the reproduction data;
a restart-output device of outputting restart representative data, which are data that are representative of the portion that was specified based on said specification data when said reproduction data is reproduction data that is paused and is to be restarted; and
an initial-output device of outputting initial representative data, which are preset data that are representative of the entire reproduction data when said reproduction data are reproduction data to be reproduced from the beginning of the reproduction data.

## Patentansprüche

1. Datenwiedergabevorrichtung, **gekennzeichnet durch**
eine Speichervorrichtung (9) zum Speichern von Bestimmungsdaten zum Bestimmen eines Abschnitts von Wiedergabedaten, deren Wiedergabe neu gestartet werden soll, beim Anhalten der Wiedergabe der Wiedergabedaten; eine Beurteilungsvorrichtung (4), die basierend auf den gespeicherten Bestimmungsdaten bestimmt, ob die zu diesem Zeitpunkt wiederzugebenden Wiedergabedaten Wiedergabedaten sind, deren Wiedergabe neu gestartet werden soll, oder Wiedergabedaten sind, die von Beginn der Wiedergabedaten an wiedergegeben werden sollen;
eine Neustartausgabevorrichtung (4) zum Ausgeben von charakteristischen Neustartdaten, die Daten sind, die für den Abschnitt charakteristisch sind, der basierend auf den Bestimmungsdaten bestimmt wurde, wenn die Wiedergabedaten Wiedergabedaten sind, die angehalten wurden und neu gestartet werden sollen; und
eine Anfangsausgabevorrichtung (4) zum Ausgeben von charakteristischen Anfangsdaten, die voreingestellte Daten sind, die für die gesamten Wiedergabedaten charakteristisch sind, wenn die Wiedergabedaten von Beginn der Wiedergabedaten an wiederzugebende Wiedergabedaten sind.

2. Datenwiedergabevorrichtung nach Anspruch 1, bei welcher
die charakteristischen Daten Bilddaten sind;
die charakteristischen Neustartdaten das in diesem Abschnitt zuerst wiederzugebende Bild sind; und
die charakteristischen Anfangsdaten ein voreingestelltes Bild sind, das die gesamten Wiedergabedaten darstellt.

3. Datenwiedergabevorrichtung nach Anspruch 1 oder 2, bei welcher die Bestimmungsdaten die Wiedergabezeit am Beginn des Abschnitts auf der Wiedergabezeitlinie der Wiedergabedaten, deren Wiedergabe neu gestartet werden soll, sind.

4. Datenwiedergabeverfahren, **gekennzeichnet durch**
einen Speichervorgang zum Speichern von Bestimmungsdaten zum Bestimmen eines Abschnitts von Wiedergabedaten, deren Wiedergabe neu gestartet werden soll, beim Anhalten der Wiedergabe der Wiedergabedaten;
einen Beurteilungsvorgang, der basierend auf den gespeicherten Bestimmungsdaten bestimmt, ob die zu diesem Zeitpunkt wiederzugebenden Wiedergabedaten Wiedergabedaten sind, deren Wiedergabe neu gestartet werden soll, oder Wiedergabedaten sind, die von Beginn der Wiedergabedaten an wiedergegeben werden sollen;
einen Neustartausgabevorgang zum Ausgeben von charakteristischen Neustartdaten, die Daten sind, die für den Abschnitt charakteristisch sind, der basierend auf den Bestimmungsdaten bestimmt wurde, wenn die Wiedergabedaten Wiedergabedaten sind, die angehalten wurden und neu gestartet werden sollen; und
einen Anfangsausgabevorgang zum Ausgeben von charakteristischen Anfangsdaten, die voreingestellte Daten sind, die für die gesamten Wiedergabedaten charakteristisch sind, wenn die Wiedergabedaten von Beginn der Wiedergabedaten an wiederzugebende Wiedergabedaten sind.

5. Datenaufzeichnungsmedium, in dem ein Programm so aufgezeichnet ist, dass es durch einen in der Datenwiedergabevorrichtung, die Wiedergabedaten wiedergibt, enthaltenen Computer lesbar ist, wobei das Programm den Computer funktionieren lässt als:
eine Speichervorrichtung zum Speichern von Bestimmungsdaten zum Bestimmen eines Abschnitts der Wiedergabedaten, deren Wiedergabe neu gestartet werden soll, beim Anhalten der Wiedergabe der Wiedergabedaten; eine Beurteilungsvorrichtung, die basierend auf den gespeicherten Bestimmungsdaten bestimmt, ob die zu diesem Zeitpunkt wiederzugebenden Wiedergabedaten Wiedergabedaten sind, deren Wiedergabe neu gestartet werden soll, oder Wiedergabedaten sind, die von Beginn der Wiedergabedaten an wiederzugeben sind;
eine Neustartausgabevorrichtung zum Ausgeben von charakteristischen Neustartdaten, die Daten sind, die für den Abschnitt charakteristisch sind, der basierend auf den Bestimmungsdaten bestimmt wurde, wenn die Wiedergabedaten Wiedergabedaten sind, die angehalten wurden, und neu gestartet werden sollen; und
eine Anfangsausgabevorrichtung zum Ausgeben von charakteristischen Anfangsdaten, die voreingestellte Daten sind, die für die gesamten Wiedergabedaten charakteristisch sind, wenn die Wiedergabedaten von Beginn der Wiedergabedaten an wiederzugebende Wiedergabedaten sind.

## Revendications

1. Dispositif de reproduction de données **caractérisé par** :
un périphérique de mémoire (9) de stockage de données de spécification pour spécifier une partie de données de reproduction à partir desquelles une reproduction doit être redémarrée lors de la mise en pause de la reproduction des données de reproduction ;
un périphérique de jugement (4) qui détermine, en fonction desdites données de spécification stockées, si oui ou non lesdites données de reproduction devant être reproduites à ce moment sont des données de reproduction à partir desquelles la reproduction doit être redémarrée, ou des données de reproduction qui sont à reproduire à partir du début des données de reproduction ;
un périphérique de redémarrage-sortie (4) de sortie de données représentatives de redémarrage, qui sont des données représentatives de la partie qui a été spécifiée en fonction desdites données de spécification lorsque lesdites données de reproduction sont de données de reproduction qui sont mises en pause et qui doivent être redémarrées ; et
un périphérique initial-sortie (4) de sortie de données représentatives initiales, qui sont des données prédéfinies qui sont représentatives de l'ensemble des données de reproduction lorsque lesdites données de reproduction sont des données de reproduction à reproduire à partir du début des données de reproduction.

2. Dispositif de reproduction de données selon la revendication 1, dans lequel :
lesdites données représentatives sont des données d'image ;
lesdites données représentatives de redémarrage sont l'image à reproduire en premier au niveau de ladite partie ; et
lesdites données représentatives initiales sont une image prédéfinie représentant l'ensemble des données de reproduction.

3. Dispositif de reproduction de données selon la revendication 1 ou 2, dans lequel :
lesdites données de spécification sont l'heure de reproduction au début de ladite partie de la chronologie de reproduction desdites données de reproduction à partir de laquelle la reproduction doit être redémarrée.

4. Procédé de reproduction de données **caractérisé par** :
un processus de mémoire de stockage de données de spécification pour spécifier une partie de données de reproduction à partir de laquelle la reproduction doit être redémarrée lors de la mise en pause de la reproduction des données de reproduction ;
un processus de jugement qui détermine, en fonction desdites données de spécification stockées, si oui ou non lesdites données de reproduction devant être reproduites à ce moment sont des données de reproduction à partir desquelles la reproduction doit être redémarrée, ou des données de reproduction qui sont à reproduire à partir du début des données de reproduction ;
un processus de redémarrage-sortie de sortie de données représentatives de redémarrage, qui sont des données représentatives de la partie qui a été spécifiée en fonction desdites données de spécification lorsque lesdites données de reproduction sont de données de reproduction qui sont mises en pause et qui doivent être redémarrées ; et
un processus initial-sortie de sortie de données représentatives initiales, qui sont des données prédéfinies qui sont représentatives de l'ensemble des données de reproduction lorsque lesdites données de reproduction sont des données de reproduction à reproduire à partir du début des données de reproduction.

5. Support d'enregistrement de données dans lequel un programme est enregistré afin de pouvoir être lu par un ordinateur inclus dans le dispositif de reproduction de données qui reproduit des données de reproduction, dans lequel ledit programme permet audit ordinateur de fonctionner comme :
un périphérique de mémoire de stockage de données de spécification pour spécifier une partie des données de reproduction à partir desquelles une reproduction doit être redémarrée lors de la mise en pause de la reproduction des données de reproduction ;
un périphérique de jugement qui détermine, en fonction desdites données de spécification stockées, si oui ou non lesdites données de reproduction devant être reproduites à ce moment sont des données de reproduction à partir desquelles la reproduction doit être redémarrée, ou des données de reproduction qui sont à reproduire à partir du début des données de reproduction ;
un périphérique de redémarrage-sortie de sortie de données représentatives de redémarrage, qui sont des données représentatives de la partie qui a été spécifiée en fonction desdites données de spécification lorsque lesdites données de reproduction sont de données de reproduction qui sont mises en pause et qui doivent être redémarrées ; et
un périphérique initial-sortie de sortie de données représentatives initiales, qui sont des données prédéfinies qui sont représentatives de l'ensemble des données de reproduction lorsque lesdites données de reproduction sont des données de reproduction à reproduire à partir du début des données de reproduction.
